# EUROPEAN PATENT SPECIFICATION

(11) **EP 1 987 273 B1**
(45) Date of publication and mention of the grant of the patent: **25.04.2012**
(21) Application number: 07705376.7
(22) Date of filing: 14.02.2007
(51) Int. Cl.: F16J 15/32, F16J 15/12

(54) **SEAL**
DICHTUNG
JOINT

(30) Priority: 20.02.2006 GB 0603318
(43) Date of publication of application: 05.11.2008
(73) Proprietor: Edwards Limited, Crawley, West Sussex RH10 9LW (GB)
(72) Inventor: OKOROAFOR, Emmanuel, Uzoma, Burgess Hill Sussex RH15 9TT (GB)
(74) Representative: Clark, Charles Robert
(86) International application number: PCT/GB2007/050063
(87) International publication number: WO 2007/096664

(56) References cited:
- EP-A- 1 025 987
- EP-A- 1 291 401
- US-A- 5 163 692
- US-A1- 2004 100 038

## Description

The present invention relates to a seal. The seal finds particular, but not exclusive, use in a vacuum pump.

Vacuum pumps are known which are oil-free in their pumping chambers and which are therefore useful in clean manufacturing environments such as those found in the semiconductor industry. Such dry vacuum pumps are commonly multi-stage positive displacement pumps employing intermeshing rotors in each pumping stage. The rotors may have the same type of profile in each stage or the profile may change from stage to stage.

In a Roots or Northey ("claw") type dry vacuum pump, the stator is typically formed from a number of separate stator components, with the rotors being located in the pumping chambers defined between the stator components. It is therefore necessary to provide sealing between the stator components in order to prevent leakage of pumped fluid from the pump and to prevent ambient air from entering the pump. An o-ring seal is typically provided to perform this sealing function.
(EP-A-1025987)

Dry vacuum pumps are frequently deployed in applications where they are required to pump substantial quantities of corrosive fluids, including halogen gases and solvents. Such materials attack the o-ring seals, with the result that the seals may become excessively plastic or very brittle, which can badly affect the integrity of the seal provided between the stator components. The intensity of the attack on the seal is dependant on a number of variables including, for example, the pumped fluid, the o-ring material, and the pump temperature. For example, seals formed from an FKM elastomer (or fluoro elastomer) such as Viton^{®} or Tecnoflon^{®} are particularly prone to attack when, for example, pumping fluorine gas at a temperature in excess of 140°C. Existing alternative seals for use in a harsh pumping environment are formed from an FFKM elastomer (or perfluorinated elastomer) such as Kalrez^{®} or Chemraz^{®}, but these are significantly more expensive than Viton^{®}. Furthermore, FFKM elastomers have a relatively high compression set, that is, a relatively high amount of the material fails to return to its original thickness after being subject to a standard compressive load for a fixed period of time, in comparison to FKM elastomers.

It is an aim of at least the preferred embodiment of the present invention to seek to solve this problem.

In a first aspect, the present invention provides a vacuum pump o-ring seal comprising a compliant annular body, an annular reinforcing member embedded within the annular body, and a coating of FFKM elastomer.

The presence of an annular reinforcing member embedded within the annular body can enable the seal to have a very low compression set. The reinforcing member is preferably compression set resistant, and so consequently a high sealing stress may be retained with time by the seal. The coating of FFKM elastomer (or perfluorinated elastomer) can enable the seal to have a relatively high corrosion resistance together with good leak tightness and low gas permeability. The use of only a coating of (relatively expensive) FFKM elastomer can significantly reduce costs in comparison to a seal formed exclusively from an FFKM elastomer annular body.

In a preferred embodiment, the annular body is formed from an FKM elastomer, or fluoro elastomer, and so in a second aspect, the present invention provides a vacuum pump o-ring seal comprising an annular body of FKM elastomer, an annular reinforcing member embedded within the annular body, and a coating of FFKM elastomer.

The FKM elastomer may comprise one of a fluoro elastomer (including any of Viton^{®} type A, Viton^{®} type B, Viton^{®} type F and Viton^{®} Extreme materials). available from DuPont, Ausimont, Daikin, and an Aflas^{®} fluoro elastomer, available from Asahi Glass Ltd.

The compliant body may comprise filler material selected from the group comprising carbon, calcium fluoride, silica, barium sulphate and titanium oxide.

The FFKM elastomer may comprises one of a Kalrez^{®} perfluorinated elastomer , available from DuPont, a Chemraz^{®} perfluorinated elastomer, available from Greene, Tweed & Co, Inc., a Parofluor™ perfluorinated elastomer, a Hifluor™ perfluorinated elastomer, both available from Parker Hannifin Corp., a Simriz^{®} perfluorinated elastomer, available from Freudenberg Simrit LP, and an Isolast^{®} perfluorinated elastomer, available from Busak and Shamban (Trelleborg). The coating preferably has a thickness in the range from 0.1 to 0.3 mm.

The FFKM elastomer may be replaced by another FKM elastomer having a superior corrosion resistance than the FKM elastomer from which the annular body is formed. Therefore, in a third aspect the present invention provides a seal comprising an annular body of a first FKM elastomer, an annular reinforcing member embedded within the annular body, and a coating of a second FKM elastomer having a superior corrosion resistance to the first FKM elastomer.

As another alternative, the annular body may be formed from the same material as the coating. The present invention also provides a seal comprising a compliant annular body, preferably of FKM elastomer, an annular reinforcing member embedded within the annular body, and a coating of FKM elastomer.

In any of the above aspects, the reinforcing member preferably comprises one of a metallic coil and a perforated metallic or plastics tube. Alternative forms for the reinforcing member include braided metal wires, braided graphite wires and a flexible graphite tubular member.

As a coating of FKM, or FFKM, elastomer is vacuum compatible, the seal finds particular use in a vacuum pump. Therefore, in another aspect, the present invention provides a vacuum pump comprising two stator components and a seal as aforementioned located between the components such that each component is in contact with the seal to provide a fluid-tight seal between the components.

Preferred features of the present invention will now be described, by way of example only, with reference to the accompanying drawings, in which:
Figure 1 is a front view of a stator component of a vacuum pump;
Figure 2 is a side cross-sectional view of the seal in Figure 1;
Figure 3 is a perspective view of an example of an insert for the seal of Figure 2;
Figure 4 is a side cross-sectional view of another seal suitable for use in a vacuum pump;
Figure 5 is a perspective view of an example of an insert for the seal of Figure 4.

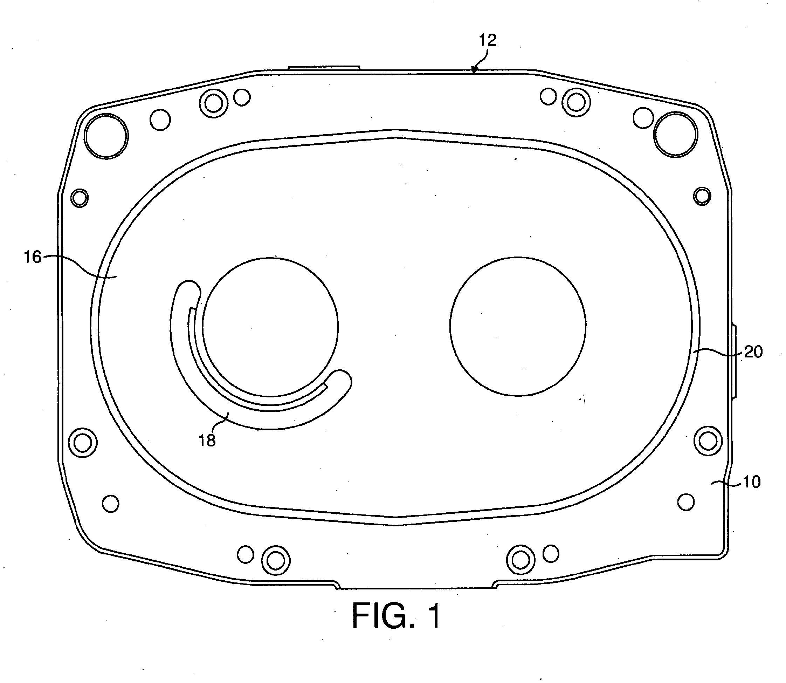

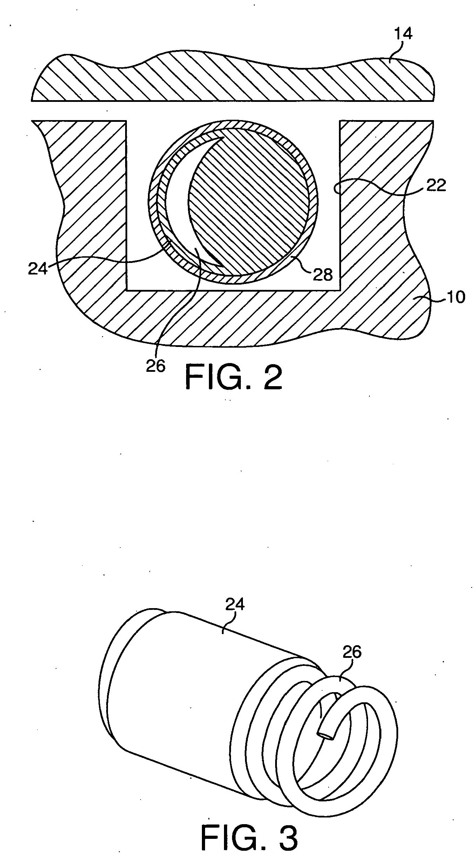

Figure 1 illustrates the surface 10 of a stator component 12 from a pumping stage of a typical multi-stage dry pump. During pump assembly, a corresponding surface 14 of a second stator component (see Figure 2) is brought into contact with the surface 10 of the component 12 to form a cavity 16 between the stator components. This cavity 16 is provided to accommodate the rotor components (not shown) of the pump. A dry pump having Roots and/or Northey ("claw") type rotors typically comprises several such stages, the cavity 16 of each stage communicating with the adjacent downstream stage through a port 18.

As in conventional pumps of this type, a seal 20 is provided around the periphery of the cavity 16 to provide a fluid tight seal between the surfaces 10, 14 of the adjacent stator components such that process fluid is prevented from escaping from the cavity 16 and ambient air is prevented from entering the cavity 16 when the pump is in use.

Figure 2 illustrates one example of a seal 20 according to the present invention. The seal 20 is located within a groove 22 formed in the surface of one of the stator components. The seal 20 comprises a complaint annular body 24, an annular reinforcing member 26 embedded within the annular body 24 and a coating 28 of FFKM elastomer, for example one of of a Kalrez^{®} perfluorinated elastomer, a Chemraz^{®} perfluorinated elastomer, a Parofluor™ perfluorinated elastomer, a Hifluor™ perfluorinated elastomer, a Simriz^{®} perfluorinated elastomer, an Isolast^{®} perfluorinated elastomer and a Perlast^{®} perfluorinated elastomer.

The annular body 24 may be formed from any material appropriate to the environment in which the seal is to be used. For use at relatively high temperatures, thermal stability may be provided by forming the annular body from a melt processible fluoroplastic material such as fluorinated ethylene propylene (FEP), perfluoroalkoxy (PFA), polychlorotrifluoroethylene (CTFE), polyvinylidene fluoride (PVDF), and polyvinylfluoride (PVF). For use at relatively low temperatures, thermal stability may be provided by forming the annular body from an FKM elastomer. The FKM elastomer may comprise one of a fluoro elastomer (including any of Viton^{®} type A, Viton^{®} type B, Viton^{®} type F and Viton^{®} Extreme materials), available from DuPont, Ausimont, Daikin, and an Aflas^{®} fluoro elastomer, available from Asahi Glass Ltd. Filler material selected from the group comprising carbon, calcium fluoride, silica, barium sulphate and titanium oxide, may be dispersed within the annular body 24.

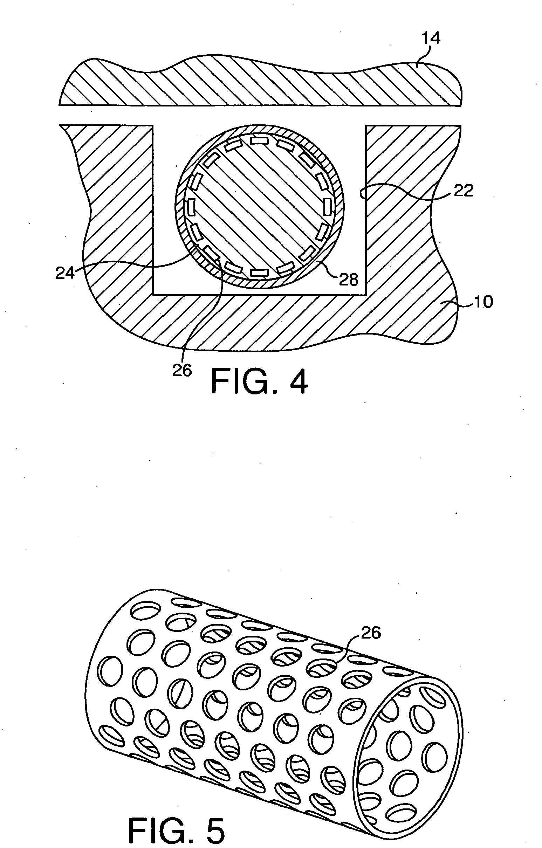

In the example illustrated in Figures 2 and 3, the annular reinforcing member 26 is provided by a compression set resistant coil 26. The coil 26 is preferably formed from metallic material, such as stainless steel. In the example illustrated in Figures 4 and 5, the annular reinforcing member is provided by a perforated metallic or plastics tube 26. The annular body 24 is formed over the reinforcing member 26 by compression or injection molding, using techniques known to those skilled in the art.

The FFKM elastomer coating 28 preferably has a thickness in the range from 0.1 to 0.3 mm, most preferably around 0.2 mm. The annular body 28 is coated with the FFKM elastomer by transfer moulding, or similar.

In another embodiment, the annular body 24 may be made from Viton^{®} type A fluoro elastomer, while the coating 28 is made from Viton^{®} Extreme fluoro elastomer, which has superior corrosion resistance to Viton^{®} type A fluoro elastomer and is cheaper than using an FFKM elastomer. Such a seal would be suitable for use in less harsh environments, where the use of an FFKM elastomer for the coating 28 was considered unnecessary. In yet another embodiment, the coating 28 may be formed from the same material as the annular body 24.

## Claims

1. A vacuum pump o-ring seal (20) comprising a compliant annular body (24) and a coating (28) of one of FKM elastomer and FFKM elastomer **characterised in that** it further comprises an annular reinforcing member (26) embedded within the annular body

2. A seal (20) according to Claim 1, wherein the annular body (24) comprises a melt processible fluoroplastic.

3. A seal (20) according to Claim 1, wherein the annular body (24) comprises FKM elastomer.

4. A vacuum pump o-ring seal (20) according to claim 3, wherein the coating (28) comprises a second FKM elastomer having a superior corrosion resistance to the first-mentioned FKM elastomer of the annular body (24).

5. A seal (20) according to Claim 3 or Claim 4, wherein the FKM elastomer of the annular body (24) comprises one of a Viton^{®} - type fluoro elastomer and an Aflas^{®} fluoro elastomer.

6. A seal (20) according to any preceding claim, wherein the compliant body (24) comprises filler material selected from the group comprising carbon, calcium fluoride, silica, barium sulphate and titanium oxide.

7. A seal (20) according to any preceding claim, wherein the FFKM elastomer comprises one of a Kalrez^{®} perfluorinated elastomer, a Chemraz^{®} perfluorinated elastomer, a Parofluor™ perfluorinated elastomer, a Hifluor™ perfluorinated elastomer, a Simriz^{®} perfluorinated elastomer, an Isolast^{®} perfluorinated elastomer and a Perlast^{®} perfluorinated elastomer.

8. A seal (20) according to any preceding claim, wherein the reinforcing member (26) comprises a metallic coil.

9. A seal (20) according to any of Claims 1 to 7, wherein the reinforcing member (26) comprises a perforated metallic or plastics tube.

10. A vacuum pump comprising two stator components (12) and a seal (20) according to any preceding claim located between the components such that each component is in contact with the seal to provide a fluid-tight seal between the components.

## Patentansprüche

1. Vakuumpumpen-O-Ringdichtung (20) mit einem nachgiebigen Ringkörper (24) und einem Überzug (28) aus FKM-Elastomer oder FFKM-Elastomer, **dadurch gekennzeichnet, dass** sie weiter ein ringförmiges Verstärkungsteil (26) aufweist, das in dem Ringkörper eingebettet ist.

2. Dichtung (20) nach Anspruch 1, wobei der Ringkörper (24) ein schmelzverarbeitbarer Fluoroplast ist.

3. Dichtung (20) nach Anspruch 1, wobei der Ringkörper (24) aus FKM-Elastomer besteht.

4. Vakuumpumpen-O-Ringdichtung (20) nach Anspruch 3, wobei der Überzug (28) aus einem zweiten FKM-Elastomer mit einer gegenüber dem erstgenannten FKM-Elastomer des Ringkörpers (24) überragenden Korrosionsbeständigkeit besteht.

5. Dichtung (20) nach Anspruch 3 oder Anspruch 4, wobei der FKM-Elastomer des Ringkörpers (24) ein Viton^{®}-Fluoro-Elastomer oder ein Aflas^{®} -Fluoro-Elastomer ist.

6. Dichtung (20) nach irgendeinem vorhergehenden Anspruch, wobei der nachgiebige Körper (24) ein Füllmaterial aus der Gruppe Kohlenstoff, Kalziumfluorid, Silica, Bariumsulphat und Titanoxid enthält.

7. Dichtung (20) nach irgendeinem vorhergehenden Anspruch, wobei der FFKM-Elastomer einen perfluorinierten Kalrez^{®}-Elastomer einen perfluorinierten Chemraz^{®}-Elastomer, einen perfluorinierten Parofluor^{™}-Elastomer, einen perfluorinierten Hifluor^{™}-Elastomer, einen perfluorinierten Simriz^{®}-Elastomer, einen perfluorinierten Isolast^{®}-Elastomer oder einen perfluorinierten Perlast^{®}-Elastomer aufweist.

8. Dichtung (20) nach irgendeinem vorhergehenden Anspruch, wobei das Verstärkungsteil eine Metallwicklung ist.

9. Dichtung (20) nach einem der Ansprüche 1 bis 7, wobei das Verstärkungsteil (26) ein perforiertes Metall- oder Kunststoffrohr ist.

10. Vakuumpumpe mit zwei Statorkomponenten (12) und einer Dichtung (20) nach irgendeinem vorhergehenden Anspruch, der zwischen den Komponenten angeordnet ist, so dass jede Komponente mit der Dichtung in Berührung steht, um eine Strömungsmitteldichte Abdichtung zwischen den Komponenten herzustellen.

## Revendications

1. Joint torique (20) pour pompe à vide, comprenant un corps annulaire flexible (24) et un revêtement (28) de l'un d'entre un élastomère FKM et un élastomère FFKM, *caractérisé en ce qu*'il comprend en outre un élément de renfort annulaire (26) incorporé dans le corps annulaire.

2. Joint (20) selon la revendication 1, dans lequel le corps annulaire (24) comprend une matière plastique fluorée pouvant être traitée à l'état fondu.

3. Joint (20) selon la revendication 1, dans lequel le corps annulaire (24) comprend un élastomère FKM

4. Joint torique (20) pour pompe à vide selon la revendication 3, dans lequel le revêtement (28) comprend un deuxième élastomère FKM ayant une résistance à la corrosion supérieure à celle de l'élastomère FKM du corps annulaire (24) premier mentionné.

5. Joint (20) selon la revendication 3 ou la revendication 4, dans lequel l'élastomère FKM du corps annulaire (24) comprend l'un d'entre un élastomère fluoré de type Viton® et d'un élastomère fluoré Aflas®.

6. Joint (20) selon l'une quelconque des revendications précédentes, dans lequel le corps flexible (24) comprend une matière de charge choisie dans le groupe comprenant le carbone, le fluorure de calcium, la silice, le sulfate de baryum et le dioxyde de titane.

7. Joint (20) selon l'une quelconque des revendications précédentes, dans lequel l'élastomère FFKM comprend l'un d'entre un élastomère perfluoré Kalrez®, un élastomère perfluoré Chemraz®, un élastomère perfluoré Parofluor®, un élastomère perfluoré Hifluor™, un élastomère perfluoré Simriz®, un élastomère perfluoré Isolast®, et un élastomère perfluoré Periast®.

8. Joint (20) selon l'une quelconque des revendications précédentes, dans lequel l'élément de renfort (26) comprend une bobine métallique.

9. Joint (20) selon l'une quelconque des revendications précédentes, dans lequel l'élément de renfort (26) comprend un tube perforé en métal ou en matière plastique.

10. Pompe à vide comprenant deux composants stator (12) et un joint (20) selon l'une quelconque des revendications précédentes, joint situé entre les composants de telle sorte que chaque composant soit en contact avec le joint pour assurer un joint étanche aux fluides entre les composants.
